# EUROPEAN PATENT APPLICATION

(11) **EP 1 976 193 A1**
(43) Date of publication of application: **01.10.2008**
(21) Application number: 08152837.4
(22) Date of filing: 17.03.2008
(51) Int. Cl.: H04L 12/28, H04L 12/24, H04L 12/56

(54) **Communication device, communication control system, communication control method and recording medium recording communication control program**

(30) Priority: 26.03.2007 JP 2007078752
(71) Applicant: NEC CORPORATION, Minato-ku, Tokyo 108-8001 (JP)
(72) Inventor: Kanda, Yasuhisa, Tokyo Tokyo 108-8001 (JP); Nakaishi, Hiroshi, Tokyo Tokyo 108-8001 (JP); Ikai, Kazuhito, Tokyo Tokyo 108-8001 (JP)
(74) Representative: Vossius & Partner

(57) **Abstract**

The present invention provides a communication control system that monitors a status of a transmission line, and can dynamically change a communication band used by a communication device included in an access line based on the monitored result. Line terminal devices (200-1 to 200-n) monitor a status of transmission lines (1, 2) connected to the line terminal devices (200-1 to 200-n), and control a communication band used for performing data communication in accordance with the status of the transmission lines (1, 2). A line aggregation device (300) monitors a status of transmission lines (2, 3), and controls a communication band used for performing data communication in accordance with the status of the transmission lines (2, 3).

## Description

This application is based upon and claims the benefit of priority from Japanese patent application No.2007-078752, filed on March 26, 2007, the disclosure of which is incorporated herein in its entirety by reference.

The present invention relates to a communication device, a communication control system, a communication control method and a recording medium recording a communication control program, and, more particularly, to a communication device, communication control system, communication control method and a recording medium recording a communication control program all for enabling to dynamically change the communication band used by each communication device included in the access line.

At present, network managers manually set the communication band for each communication device included in an access line. In general, the communication band is set, for example, at the initiation of operation or at the time of changing its setting.

A compression method for application data is not changed, an error correction system and cryptosystem used at the time of communication are not changed either, thus those methods are fixed in each communication device included in the access line.

Therefore, a problem is that such a communication device included in the access line cannot dynamically adapt to a change in a kind or amount of application data flowing through a transmission line.

Even if excess bands exist in the transmission line, data over the communication band fixed in the communication device included in the access line cannot flow through the transmission line, thus not attaining the effective use of the band of the transmission line.

In such circumstances, it is very important to develop a method for enabling to dynamically change the communication band used by each communication device included in the access line in accordance with the status of the transmission line.

As technical document that has been filed prior to the present invention, one document discloses a technique for applying IEEE802.11 WEP into a wireless LAN system including a plurality of APs and many STAs (see, for example, Japanese Patent Application Laid-Open (JP-A) No. 2001-111543 (patent document 1)).

In addition, another document discloses a technique for compressing an image using a highly flexible image compression technique (see, for example, JP-A No. 2001-177830 (patent document 2)).

A document discloses a technique for assigning a band in accordance with a data flow rate so as to increase the effective use of the frame through the network in its entirety (see, for example, JP-A No. 2003-60602 (patent document 3)).

A document discloses a technique for controlling to change a data format, such as translation controlling or error resilience controlling for a change in the communication environment at a high response speed (see, for example, JP-A No. 2006-129277 (patent document 4)).

A document discloses a technique for attaining the effective use of the frequency by allocating an excess band of one line to another line without enough available band in a fixed wireless access system (see, for example, Japanese Patent No. 3782365 (patent document 5)).

Any of the above-described Patent documents 1 to 5 neither discloses nor suggests the necessity of a technique for monitoring a status of the transmission line so as to dynamically change the communication band used by each communication device included in the access line, based on the monitored result.

The present invention has been made in consideration of the above. It is accordingly an exemplary object of the present invention to provide a communication device, communication control system, communication control method and recording medium recording a communication control program all for dynamically changing the communication band used by each communication device included in an access line, based on a monitored result representing a status of the transmission line.

### <Communication Device>

A communication device according to the present invention is included in an access line, includes:
a monitor unit which monitors a status of a transmission line connected to the communication device; and
a communication control unit which controls a communication band used for performing data communication, in accordance with the status of the transmission line.

### <Communication Control System>

A communication control system according to the present invention includes a plurality of communication devices connected with other through a transmission line so as to form an access line,
wherein each of the communication devices includes
a monitor unit which monitors a status of the transmission line connected to each of the communication devices, and
a communication control unit which controls a communication band used for performing data communication in accordance with the status of the transmission line.

### <Communication Control Method>

A communication control method according to the present invention, which is performed by a communication device included in an access line, includes the steps of
monitoring a status of a transmission line connected to the communication devices; and
controlling a communication band used for performing data communication in accordance with the status of the transmission line.

### <Recording Medium Recording Communication Control Program>

A recording medium recording a communication control program according to the present invention stores a communication control program for controlling a communication device included in an access line to execute processes of:
monitoring a status of a transmission line connected to the communication devices; and
controlling a communication band used for performing data communication in accordance with the status of the transmission line.

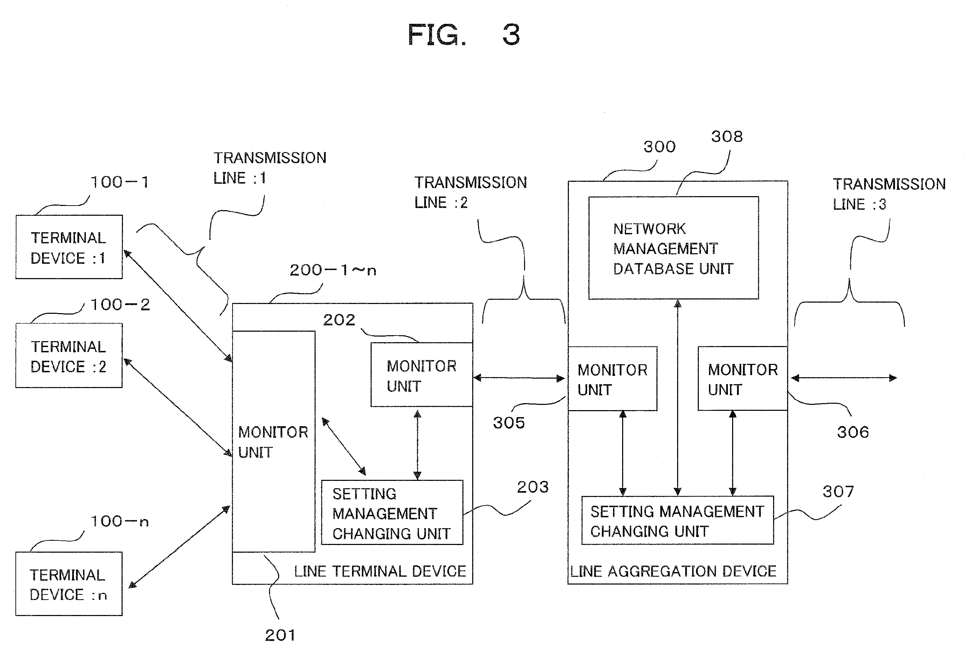

Descriptions will now be made to the scheme of a communication control system of the exemplary embodiment with reference to FIG. 3.

FIG. 1 is a diagram showing a system configuration of a communication control system according to an exemplary embodiment of the present invention.

FIG. 2 is a diagram showing a configuration example when a line aggregation device (300) is composed of a plurality of units.

FIG. 3 is a diagram showing functional configurations of line terminal devices (200-1 to 200-n) and the line aggregation device (300).

### <Scheme of Communication Control System>

Descriptions will now be made to the scheme of a communication control system of the exemplary embodiment with reference to FIG. 3.

The communication control system of the exemplary embodiment includes a plurality of communication devices (corresponding to line terminal devices: 200-1 to 200-n, a line aggregation device: 300) connected with each other through transmission lines (1, 2, 3) so as to form an access line.

The communication devices (for example, the line terminal devices: 200-1 to 200-n) monitor the status of transmission lines (1, 2) connected thereto, and control the communication band used for data communication in accordance with the status of the transmission lines (1, 2).

The communication devices (200-1 to 200-n) monitor the status of the transmission lines (1, 2), and can dynamically change the communication band used by the communication devices (200-1 to 200-n) included in the access line based on the monitored result.

The communication device (for example, the line aggregation device: 300) monitors the status of the transmission lines (2, 3) connected thereto, and controls the communication band used for data communication in accordance with the status of the transmission lines (2, 3).

The communication device (300) monitors the status of the transmission lines (2, 3), and can dynamically change the communication band used by the communication device (300) included in the access line based on the monitored result.

The communication control system of the exemplary embodiment will now specifically be described with reference to the accompanying drawings.

### (First Exemplary Embodiment)

### <System Configuration of Communication Control System>

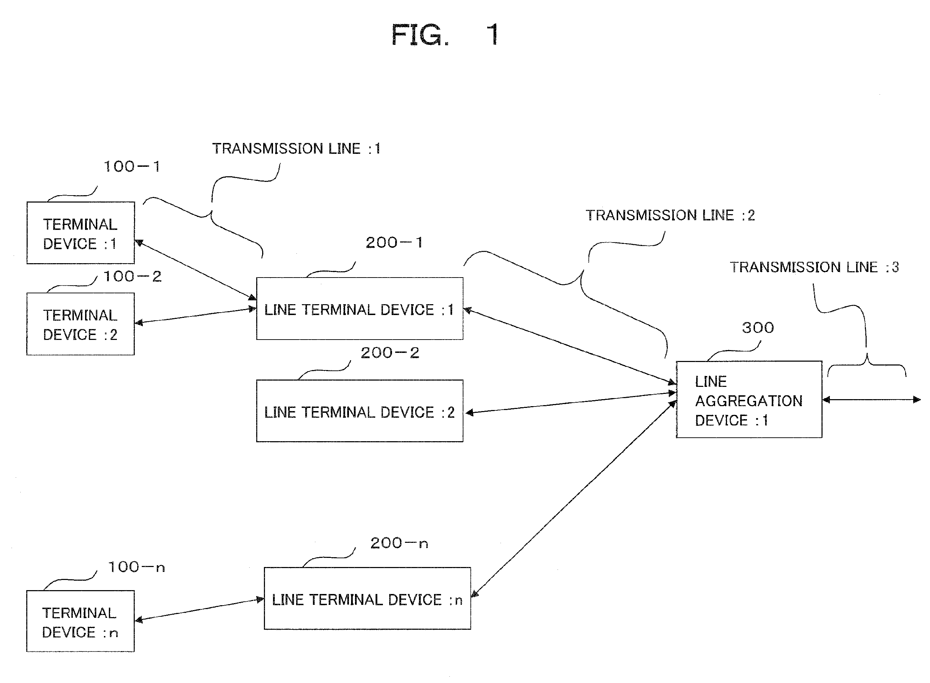

The system configuration of the communication control system of the present embodiment will now be described with reference to FIG. 1. FIG. 1 is a diagram showing the system configuration of the communication control system of the present embodiment.

The communication control system of the present embodiment includes terminal devices (100-1 to 100-n: n is an arbitrary integer), the line terminal devices (200-1 to 200-n) and the line aggregation device (300) so as to form the access line.

Any transmission line can be adopted for each of the transmission lines (1-3) of the access line, as long as it enables information communication between the devices. For example, copper wiring, an optical fiber or wireless system can be adopted.

### <Terminal Devices: 100-1 to 100-n>

The terminal devices (100-1 to 100-n) are communication devices, such as a computer, a telephone, a TV, a router, a switch, a STB (Set Top Box).

Each of the terminal devices (100-1 to 100-n) includes an interface of the transmission line (1) connected to the line terminal devices (200-1 to 200-n) in order to connect to the access line.

### <Line Terminal Devices: 200-1 to 200-n>

The line terminal devices (200-1 to 200-n) are a communication device installed in houses or buildings. Examples of the line terminal devices (200-1 to 200-n) include an ADSL (Asymmetric Digital Subscriber Line), a VDSL (Very high-bit-rate Digital Subscriber Line), a modem of CATV (Community Antenna Television), and the like, a MC (Media Converter), an ONU (Optical Network Unit) of PON (Passive Optical Network), a wireless system, and the like.

Each of the line terminal devices (200-1 to 200-n) includes an interface of the transmission line (1) connected to the terminal devices (100-1 to 100-n) and an interface of the transmission line (2) connected to the line aggregation device (300).

### <Line Aggregation Device: 300>

The line aggregation device (300) is a communication device including a function for terminating the transmission line and a function for managing network users and/or network settings.

The line aggregation device (300) includes an interface of the transmission line (2) connected to the line terminal devices (200-1 to 200-n) and an interface of the transmission line (3) connected to the upper network.

The line aggregation device (300) may be formed of a plurality of devices corresponding to the respective functions, and may realize the entire functions by the single device.

### <Configuration for Realizing Functions of Line Aggregation Device: 300 Formed of a Plurality of Devices>

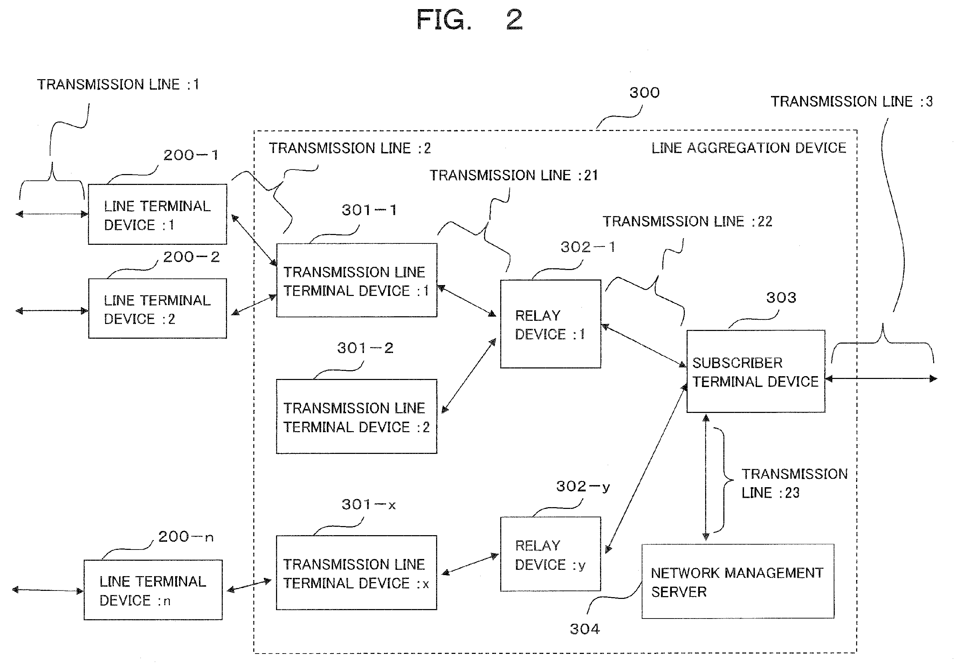

Descriptions will now be made to a case of forming the line aggregation device (300) shown in FIG. 1 in combination of a plurality of devices, corresponding to the respective functions, with reference to FIG. 2. The configuration shown in FIG. 2 corresponds to the transmission line (2) and the line aggregation device (300) shown in FIG. 1.

As shown in FIG. 2, as a configuration example of forming a plurality of devices, for example, the line aggregation device (300) is formed with transmission line terminal devices (301-1 to 301-x: x is an arbitrary integer), relay devices (302-1 to 302-y: Y is an arbitrary integer), a subscriber terminal device (303) and a network management server (304).

Any transmission line may be adopted, as long as each of transmission lines (21 to 23) enables information communication between the devices. For example, copper wiring, an optical fiber or wireless system can be adopted.

### <Transmission Line Terminal Devices: 301-1 to 301-x>

The transmission line terminal devices (301-1 to 301-x) terminate the transmission line (2), such as copper wiring, an optical fiber or wireless system.

Examples of the transmission line terminal devices (301-1 to 301-x) include: a DSLAM (Digital Subscriber Line Access Multiplexer) for realizing DSL (Digital Subscriber Line) communications, such as an ADSL, VDSL, an OLT (Optical Line Terminal) of MC or PON for realizing optical communications, and a wireless system for realizing wireless communications.

Each of the transmission line terminal devices (301-1 to 301-x) includes an interface of the transmission line (2) connected to the line terminal devices (200-1 to 200-n) and an interface of the transmission line (21) connected to the upper device.

### <Relay Devices: 302-1 to 302-y>

The relay devices (302-1 to 302-y) are communication devices for connecting between the transmission line terminal devices (301-1 to 301-x) and the subscriber terminal device (303).

Examples of the relay devices (302-1 to 302-y) are communication devices, such as a layer 2 switch and router for performing layer 2 or 3 communication.

Each of the relay devices (302-1 to 302-y) includes an interface of the transmission line (21) connected to the transmission line terminal devices (301-1 to 301-x) and an interface of the transmission line (22) connected to the subscriber terminal device (303).

### <Subscriber Terminal Device: 303>

The subscriber terminal device (303) is a communication device for managing users who use the network with a protocol, such as PPP (Point-to-Point Protocol) or DHCP (Dynamic Host Configuration Protocol).

An example of the subscriber terminal device (303) includes a communication device called a BAS (Broadband Access Server).

The subscriber terminal device (303) includes an interface of the transmission line (22) connected to the lower device, an interface of the transmission line (23) connected to the network management server (304) and an interface of the transmission line (3) connected to the upper device.

### <Network Management Server: 304>

The network management server (304) is a communication device including a database which manages operating plan information including setting information to be set for each communication device, network information and information regarding users using the network.

The network management server (304) includes an interface of the transmission line (23) connected to the subscriber terminal device (303).

### <Functional Configuration of Line Terminal Devices: 200-1 to 200-n and Line Aggregation Device: 300>

The functional configurations of the line terminal devices (200-1 to 200-n) and the line aggregation device (300) will now be described with reference to FIG. 3. FIG. 3 is a diagram showing the functional configurations of the line terminal devices (200-1 to 200-n) and the line aggregation device (300).

Each of the line terminal devices (200-1 to 200-n) includes a first monitor unit (201), a second monitor unit (202) and a setting management changing unit (203).

The first and second monitor units (201, 202) include a function for monitoring a signal flowing using the interface of each transmission line, a function for determining a control protocol such as SIP (Session Initiation Protocol), RTSP (Real Time Streaming Protocol), RTCP (RTP Control Protocol) used for controlling to send/receive data and a function for sending and receiving a control frame for changing the setting information between the communication devices.

The setting management changing unit (203) is to change the band setting, error correction system, cryptosystem and data compression method of the interface of each transmission line, based on the monitored results of the first and second monitor units (201, 202) and the operating plan information informed from a network management database unit (308) of the line aggregation device (300).

The line aggregation device (300) includes a first monitor unit (305), a second monitor unit (306), a setting management changing unit (307) and the network management database unit (303).

The first and second monitor units (305, 306) include the same functions as those of the first and second monitor units (201, 202) of the line terminal devices (200-1 to 200-n).

The setting management changing unit (307) includes the same functions as the setting management changing unit (203) of the line terminal devices (200-1 to 200-n).

The network management database unit (308) is to manage the setting information to be set for each of the communication devices, network information and operating plan information regarding information of users using the network.

The network manager registers target operating plan information to be changed in the network management database unit (308), when intended to change the operating plan information managed by the network management database unit (308). As a result, the network management database unit (308) automatically informs each communication device included in the access line about the registered operating plan information.

As shown in FIG. 2, when the line aggregation device (300) is formed of a plurality of devices, the monitor units (305, 306) and the setting management changing unit (307) shown in FIG. 3 are included in at least one of the transmission line terminal devices (300-1 to 300-x), the relay devices (302-1 to 302-y) and the subscriber terminal device (303).

### <Control Operation in Communication Control System>

A control operation in the communication control system of the present embodiment will now be described with reference to FIG. 3.

### <Method of Changing Setting of Error Correction System>

Descriptions will now be made to a method of changing setting of error correction system with reference to FIG. 3.

A plurality of error correction systems exist, depending on an amount of redundant data to be attached to data and the rate of error correction. For example, FEC (Forward Error Correction) is one of the error correction systems.

The line terminal devices (200-1 to 200-n) and the line aggregation device (300) included in the present embodiment include a function for changing whether to adopt the error correction function or for changing between a plurality of error correction systems.

The network manager sets the operating plan information representing the operating plan of the access line into the network management database unit (308) of the line aggregation device (300).

The operating plan information includes, for example, a condition of not using the error correction system, and when using the error correction system, a condition of using the error correction system and information representing which error correction system is used and what data is preferentially used.

The network management database unit (308) informs the setting management changing unit (203) of each of the line terminal devices (200-1 to 200-n) and the setting management changing unit (307) of the line aggregation device (300), about the operating plan information set by the network manager.

As a result, the setting management changing unit (203) of each of the line terminal devices (200-1 to 200-n) and the setting management changing unit (307) of the line terminal device (300) set an error correction system, based on the operating plan information informed by the network management database unit (308).

The monitor units (201, 202) of the line terminal devices (200-1 to 200-n) monitor the status of the transmission lines (1) and (2), and grasp physical information or line quality of the transmission lines (1, 2), link information, data contents flowing through the transmission lines (1, 2), maximum band, amount of communication, distance, delay and fluctuations of the transmission lines (1, 2), a kind of an adjacent device or terminal, and characteristics of the device or terminal.

The monitor units (201, 202) grasp the above-described information, based on the data contents flowing through the transmission lines (1, 2), the physical information of the transmission lines (1, 2) (for example, whether or not an optical fiber at 1Gbps, or DSL, and the like), and information regarding a communication interface used in the line terminal devices (200-1 to 200-n) (for example, the various IEEE802.3, SDH, ATM, and the like).

The monitor units (305, 306) of the line aggregation device (300) monitor the status of the transmission lines (2) and (3), and grasp physical information or line quality of the transmission lines (2, 3), link information, data contents flowing through the transmission lines (2, 3), maximum band, amount of communication, distance, delay and fluctuations of the transmission lines (2, 3), a kind of an adjacent device or terminal, and characteristics of the device or terminal.

The monitor units (305, 306) grasp the above-described information, based on the data contents flowing through the transmission lines (2, 3), the physical information of the transmission lines (2, 3) (for example, whether or not an optical fiber at 1Gbps, or DSL, and the like), and information regarding a communication interface used in the line aggregation device (300) (for example, the various IEEE802.3, SDH, ATM, and the like).

As a result, the line terminal devices (200-1 to 200-n) and the line aggregation device (300) can grasp the physical information or line quality of the transmission line, the link information, the data contents flowing through the transmission line, the maximum band, amount of communication, distance, delay and fluctuations of the transmission line, a kind of an adjacent device or terminal, and characteristics of the device or terminal.

As shown in FIG. 2, when the line aggregation device (300) is formed of a plurality of devices, the line aggregation device (300) grasps information regarding the transmission line (21), the transmission line (22), and the transmission line (23), as well.

The setting management changing unit (203) automatically sets an error correction system in the unit of data flowing through the transmission lines (1, 2) in accordance with the following method, based on the monitored result of the monitor units (201, 202) and the operating plan information informed by the network management database unit (303).

At the initiation of data communication, initial setting (including an invalid error correction function) is used.

The monitor units (201, 202) monitor information regarding the physical information or line quality of the transmission lines (1, 2), the link information, the data contents flowing through the transmission lines (1, 2), the maximum band, amount of communication, distance, delay and fluctuations of the transmission lines (1, 2), a kind of an adjacent device or terminal, and characteristics of the device or terminal, and inform the setting management changing unit (203) about the monitored result.

The setting management changing unit (203) determines whether to change the setting of the error correction system, based on the monitored result informed by the monitor units (201, 202) and the operating plan information informed by the network management database unit (308).

For example, the setting management changing unit (203) grasps information representing that an error correction system X is not adopted for data A flowing through the transmission lines (1, 2) (data for arbitrary application) and a data amount of the data A, based on the monitored result informed by the monitor units (201, 202).

On the other hand, the network management database unit (308) includes set information, as operating plan information, representing the data A and representing to change to use the error correction system X when the line quality is lower than a threshold value.

The band, that can be increased and decreased freely based on a determination of each communication device, is set as the operating plan information for each transmission line, in order to avoid data discard or data delay due to a momentary increase of data flowing through the transmission line.

The following conditions are set as information regarding priority levels included in the operating plan information.

Priority 1: Error correction system X is not used, if the data amount of data A is greater than 10OMbps.

Priority 2: Error correction system X is used, if the data amount of data A is equal to or smaller than 50Mbps, and the line quality of the transmission line is lower than a threshold voltage, and further, an excess band is equal to or greater than 100Mbps.

Priority 3: Error correction system X is used, if the data amount of data A is in a range between 50Mbps and 10OMbps, and the line quality of the transmission line is lower than a threshold value, and further, an excess band is equal to or greater than 200Mbps.

The communication device including the functions of the present embodiment sends data using the band that can be increased and decreased freely based on a determination of each communication device, in a period of time since reception of data until conversion of the received data in accordance with the above-described operating plan information.

The network management database unit (308) informs the setting management changing unit (203) about the above-described operating plan information. The setting management changing unit (203) determines whether to change the setting of the error correction system, based on the above-described monitored result informed by the monitor units (201, 202) and the above-described operating plan information informed by the network management database unit (308), and changes the error correction system in accordance with the determined result. The setting management changing unit (203) makes the above-described determination at every unit of time (milliseconds, seconds, and the like). The above-described operating plan information has been described by way of example, and is not to limit the above-described conditions. Any arbitrary conditions for changing the setting of the error correction system can be formed.

When determined to change the setting of the error correction system, the setting management changing unit (203) changes the setting of the error correction system, specifies a communication device including the functions of the present embodiment, and sends a control frame to the specified communication device, so as to change the setting information in each of the devices.

There is no restriction on a method of specifying the communication device including the functions of the present embodiment, and any method can be adopted.

For example, if the control frame is transmitted between the communication devices connected through the transmission line, the setting management changing unit (203) can grasp and specify the communication device including the functions of the present embodiment. The setting management changing unit (203) can send the control frame to the specified communication device so as to change the setting information in each of the devices. In this case, the setting management changing unit (203) informs the network management database unit (308) about the grasped information. The network management database unit (308) manages the communication device including the functions of the present embodiment.

The network management database unit (308) manages the communication device including the functions of the present embodiment in advance, informs the setting management changing unit (203) about the operating plan information including the above information. Then, the setting management changing unit (203) specifies the communication device including the functions of the present embodiment based on the operating plan information informed by the network management database unit (308), and sends the control frame to the specified communication device, so as to change the setting information in each of the devices.

When the communication device connected through the transmission lines (1, 2) can receive data using a plurality of methods (error correction system, and the like), the setting management changing unit (203) can be configured to convert the data and send the converted data, instead of sending the above-described control frame.

The setting management changing unit (203) informs the network management database unit (308) about determination information representing that a changing process is necessary based on the determination, allowance information representing whether a changing process can be implemented, and result information.

The determination information may, for example, represent the band used for the data A or the line quality of the transmission line.

The allowance information representing whether a changing process can be implemented is the above-described determination information, and is informed, for example, when it is not possible to determine whether the communication device connected through the transmission line can correspond to the changing process of the setting information.

The result information may represent whether the setting of the error correction system has been changed.

The changing process is initially implemented for high priority data set in the operating plan information.

For example, the monitor units (201, 202) monitor what kind of data flows through the transmission lines (1, 2), grasp the data contents flowing through the transmission lines (1, 2), and inform the setting management changing unit (203) about the grasped data contents as a monitored result.

The setting management changing unit (203) compares the data contents included in the monitored result informed by the monitor units (201, 202) and the data contents having the priority level set in the operating plan information, and implements a changing process from the high priority data.

Note, however, that the setting management changing unit (203) implements the changing process sequentially for lower priority data, if any condition (such as the communication band, and the like) changes so as to exceed a threshold value of the operating condition included in the operating plan information, as a result that the changing process has been implemented for the high priority data.

The changing process for the lower priority data is done when there is no effect on the high priority data.

Similarly, the setting management changing unit (307) automatically sets the error correction system in the unit of data flowing through the transmission lines (2, 3), based on the monitored result of the monitor units (305, 306) and the operating plan information informed by the network management database unit (308).

The network management database unit (308) grasps a change in the monitor contents and the setting contents of each communication device, and informs the network manager about information representing that the transmission line can not efficiently be used. This information may, for example, be change information representing a change in the communication environment (information regarding deterioration of the line quality or error occurrence of interruption in the communication) or information representing the lack of band that can be increased and decreased freely based on a determination of each communication device, and the like.

### <Method of Changing Setting of Cryptosystem>

A method of changing the setting of cryptosystem will now be described with reference to FIG. 3.

There are a plurality of cryptosystems using different block lengths and key lengths.

The line terminal devices (200-1 to 200-n) and the line aggregation device (300) in the present embodiment include a function for changing whether to adopt the encryption function or for changing the plurality of cryptosystems.

The network manager sets the operating plan information representing an operating plan of the access line into the network management database unit (308) of the line aggregation device (300).

The operating plan information may, for example, be a condition of not using the cryptosystem. When the cryptosystem is used, the operating plan information may represent a condition(s) of using the cryptosystem, which cryptosystem is used, and what data has a high priority to be used.

The network management database unit (308) informs the setting management changing unit (203) of the line terminal devices (200-1 to 200-n) and the setting management changing unit (307) of the line aggregation device (300), about the operating plan information set by the network manager.

As a result, the setting management changing unit (203) of the line terminal devices (200-1 to 200-n) and the setting management changing unit (307) of the line aggregation device (300) set a cryptosystem, based on the operating plan information informed by the network management database unit (308).

The monitor units (201, 202) of the line terminal devices (200-1 to 200-n) monitor the status of the transmission line (1) and (2), and grasp physical information or line quality of the transmission lines (1, 2), link information, data contents flowing through the transmission lines (1, 2), the maximum band, amount of communication, distance, delay and fluctuations of the transmission lines (1, 2), a kind of an adjacent device or terminal, and characteristics of the device or terminal.

The monitor units (305, 306) of the line aggregation device (300) monitor the status of the transmission lines (2) and (3), and grasp physical information and line quality of the transmission lines (2, 3), link information, data contents flowing through the transmission lines (2, 3), the maximum band, amount of communication, distance, delay and fluctuations of the transmission lines (2, 3), a kind of an adjacent device or terminal, and characteristics of the device or terminal.

As a result, the line terminal devices (200-1 to 200-n) and the line aggregation device (300) can grasp the physical information or line quality of the transmission line, the link information, the data contents flowing through the transmission line, the maximum band, amount of communication, distance, delay and fluctuations of the transmission line, a kind of an adjacent device or terminal, and characteristics of the device or terminal.

The setting management changing unit (203) automatically sets the cryptosystem in the unit of data flowing through the transmission lines (1, 2) in accordance with the following method, based on the monitored result of the monitor units (201, 202) and the operating plan information informed by the network management database unit (308).

At the initiation of data communication, initial setting is used (including an invalid cryptosystem).

The monitor units (201, 202) monitor physical information or line quality of transmission lines (1, 2), link information, data contents flowing through the transmission lines (1, 2), the maximum band, amount of communication, distance, delay and fluctuations of the transmission lines (1, 2), a kind of an adjacent device or terminal, and characteristics of the device or terminal. Then, the monitor units inform the setting management changing unit (203) of the monitored result.

The setting management changing unit (203) determines whether to change the setting of the cryptosystem, based on the monitored result informed by the monitor units (201, 202) and the operating plan information informed by the network management database unit (308).

For example, the setting management changing unit (203) grasps information representing that a cryptosystem X has not been used for data A (data for arbitrary application) flowing through the transmission lines (1, 2) and a data amount of the data A, based on the monitored result informed by the monitor units (201, 202).

The network management database unit (308) includes the operating plan information which is set and represents to use the cryptosystem X for the data A, if the line quality is lower than a threshold value.

The band, that can be increased and decreased freely based on a determination of each communication device, is set as the operating plan information for each transmission line, in order to avoid data discard or data delay due to a momentary increase of data flowing through the transmission line.

The following conditions are set as information regarding priority levels included in the operating plan information.

Priority 1: Cryptosystem X is not used, if the data amount of data A is greater than 100Mbps.

Priority 2: Cryptosystem X is used, if the data amount of data A is equal to or smaller than 50Mbps, and the line quality of the transmission line is lower than a threshold voltage, and further, an excess band is equal to or greater than 100Mbps.

Priority 3: Cryptosystem X is used, if the data amount of data A is in a range between 50Mbps and 100Mbps, and the line quality of the transmission line is lower than a threshold value, and further, an excess band is equal to or greater than 200Mbps.

The communication device including the functions of the present embodiment sends data using the band that can be increased and decreased freely based on a determination of each communication device, in a period of time since reception of data until conversion of the received data in accordance with the above-described operating plan information.

The network management database unit (308) informs the setting management changing unit (203) of the above-described operating plan information. The setting management changing unit (203) determines whether to change the setting of the cryptosystem based on the above-described monitored result informed by the monitor units (201, 202) and the operating plan information informed by the network management database unit (308), so as to change the cryptosystem in accordance with the determined result. In addition, the setting management changing unit (203) makes the above-described determination at every unit of time (milliseconds, seconds, and the like). The above-described operating plan information has been described by way of example, and is not to limit the above-described conditions. Any arbitrary conditions for changing the setting of the cryptosystem can be formed.

When determined to change the setting of the cryptosystem, the setting management changing unit (203) changes the setting of the cryptosystem, specifies a communication device including the functions of the present embodiment, and sends a control frame to the specified communication device, so as to change the setting information in each of the devices.

The setting management changing unit (203) informs the network management database unit (308) about determination information representing that a changing process is necessary based on the determination, allowance information representing whether a changing process can be implemented, and result information.

The determination information may, for example, be information representing the band used for the data A or the line quality of the transmission line.

The allowance information representing whether a changing process can be implemented is the above-described determination information, and is informed, for example, when it is not possible to determine whether the communication device connected through the transmission line can correspond to the changing process of the setting information.

The result information represents whether the setting of the cryptosystem has been changed.

The changing process is initially implemented for high priority data set in the operating plan information.

Note, however, that the changing process is implemented sequentially for lower priority data, if any condition, such as the communication band, changes so as to exceed a threshold value of the operating condition included in the operating plan information, as a result that the changing process has been implemented for the high priority data.

The changing process for the lower priority data is done when there is no effect on the high priority data.

Similarly, the setting management changing unit (307) automatically sets the cryptosystem in the unit of data flowing through the transmission lines (2, 3), based on the monitored result of the monitor units (305, 306) and the operating plan information informed by the network management database unit (308).

The network management database unit (308) grasps a change in the monitor contents and the setting contents of each communication device, and informs the network manager about information representing that the transmission line can not efficiently be used. This information may, for example, be change information representing a change in the communication environment (information regarding deterioration of the line quality or error occurrence of interruption in the communication) or information representing the lack of band that can be increased and decreased freely based on a determination of each communication device.

### <Method of Changing Setting of Communication Band>

Descriptions will now be made to a method of changing the setting of a communication band in accordance with a change in the application data with reference to FIG. 3.

The line terminal devices (200-1 to 200-n) and the line aggregation device (300) in the present embodiment include a function for determining information flowing through the transmission line and a function for changing the communication band by referring to a control protocol used for controlling to send/receive data, such as SIP, RTSP or RTCP.

The network manager sets the operating plan information representing an operating plan of the access line into the network management database unit (308) of the line aggregation device (300).

The management plan information may, for example, be information regarding a control protocol flowing through the communication line, information representing which control protocol has high priority to be used, and information representing an operational condition of the control protocol.

The network management database unit (308) informs the setting management changing unit (203) of the line terminal devices (200-1 to 200-n) and the setting management changing unit (307) of the line aggregation device (300), about the operating plan information set by the network manager.

As a result, the setting management changing unit (203) of the line terminal devices (200-1 to 200-n) and the setting management changing unit (307) of the line aggregation device (300) set the communication band based on the operating plan information informed by the network management database unit (308).

The monitor units (201, 202) of the line terminal devices (200-1 to 200-n) monitor the status of the transmission line (1) and (2). The units (201, 202) grasp physical information or line quality of the transmission lines (1, 2), link information, data contents flowing through the transmission lines (1, 2), the maximum band, amount of communication, distance, delay and fluctuations of the transmission lines (1, 2), a kind of an adjacent device or terminal, and characteristics of the device or terminal.

The monitor units (305, 306) of the line aggregation device (300) monitor the status of the transmission lines (2) and (3). The monitor unit also grasps physical information or line quality of the transmission lines (2, 3), link information, data contents flowing through the transmission lines (2, 3), the maximum band, amount of communication, distance, delay and fluctuations of the transmission lines (2, 3), a kind of an adjacent device or terminal, and characteristics of the device or terminal.

As a result, the line terminal devices (200-1 to 200-n) and the line aggregation device (300) can grasp the physical information and line quality of the transmission line, the link information, the data contents flowing through the transmission line, the maximum band, amount of communication, distance, delay and fluctuations of the transmission line, the kind of an adjacent device or terminal, and characteristics of the device or terminal.

The setting management changing unit (203) automatically changes the communication band in the unit of data flowing through the communication lines (1, 2) in accordance with the following method, based on the monitored result of the monitor units (201, 202) and the operating plan information informed by the network management database unit (308).

At the initiation of data communication, initial setting of communication band is provided in the unit of user or data.

The monitor units (201, 202) monitor physical information or line quality of the transmission lines (1, 2), link information, data contents flowing through the communication lines (1, 2), the maximum band, amount of communication, distance, delay and fluctuations of the transmission lines (1, 2), a kind of an adjacent device or terminal, and characteristics of the device or terminal. Then, the monitor units inform the setting management changing unit (203) about the monitored result.

The setting management changing unit (203) determines a control protocol of data flowing through the transmission lines (1, 2), and determines whether an increase or decrease is necessary in the communication band, based on the monitored result informed by the monitor units (201, 202) and the operating plan information informed by the network management database unit (308).

For example, the setting management changing unit (203) grasps information regarding data A (data for arbitrary application) flowing through the transmission lines (1, 2) and an amount of the data A, based on the monitored result informed by the monitor units (201, 202).

For example, the network management database unit (308) includes set information, as the operating plan information, regarding the data A and representing to increase the communication band if the line quality is lower than a threshold value.

The band, that can be increased and decreased freely based on a determination of each communication device, is set as the operating plan information for each transmission line, in order to avoid data discard or data delay due to a momentary increase of data flowing through the transmission line.

The following conditions are set as information regarding priority levels included in the operating plan information.

Priority 1: Communication band is not increased, if the data amount of data A is greater than 100Mbps.

Priority 2: Communication band is increased, if the data amount of data A is equal to or smaller than 50Mbps, and the line quality of the transmission line is lower than a threshold voltage, and further, an excess band is equal to or greater than 100Mbps.

Priority 3: Communication band is increased, if the data amount of data A is in a range between 50Mbps and 100Mbps, and the line quality of the transmission line is lower than a threshold value, and further, an excess band is equal to or greater than 200Mbps.

The communication device including the functions of the present embodiment sends data using the band that can be increased and decreased freely based on a determination of each communication device, in a period of time since reception of data until conversion of the received data in accordance with the above-described operating plan information.

The network management database unit (308) informs the setting management changing unit (203) about the above-described operating plan information. The setting management changing unit (203) determines whether it is necessary to increase or decrease the communication band, based on the above-described monitored result informed by the monitor units (201, 202) and the above-described operating plan information informed by the network management database unit (308). The unit (308) sets to increase or decrease the communication band in accordance with the determined result. The setting management changing unit (203) makes the above-described determination at every unit of time (milliseconds, seconds, and the like). The above-described operating plan information has been described by way of example, and is not to limit the above-described conditions. Any arbitrary conditions for setting to increase or decrease the communication band can be formed.

When determined that it is necessary to increase or decrease the communication band, the setting management changing unit (203) sets to increase or decrease the communication band, specifies a communication device including the functions of the present embodiment, and sends a control frame to the specified communication device, so as to change the set information in each of the devices.

The setting management changing unit (203) informs the network management database unit (308) about the determination information representing that the changing process is necessary, allowance information representing whether a changing process can implemented, and result information.

The determination information may, for example, represent the band used for the data A and/or the line quality of the transmission line.

The allowance information representing whether a changing process can implemented is the above-described determination information, and is informed, for example, when it is not possible to determine whether the communication device connected through the transmission line can correspond to the changing process of the setting information.

The result information represents whether the communication band has been increased or decreased.

The changing process is preferentially implemented for high priority data set in the operating plan information.

Note, however, that the changing process is implemented sequentially for lower priority data, if any condition, such as the communication band, changes so as to exceed a threshold value of the operating condition included in the operating plan information, as a result that the changing process has been implemented for the high priority data.

The changing process for the lower priority data is implemented when there is no effect on the high priority data.

As a result, the line terminal devices (200-1 to 200-n) can automatically control the communication band for each subscriber, when the communication band is restricted for each subscriber.

For example, in the transmission line (1) at 1Gbit/sec, the maximum band of the terminal device: 1 (100-1) is restricted to 100 Mbit/sec, while the maximum band of the terminal device: 2 (100-1) is restricted to 10 Mbit/sec. In addition, the communication band at 200Mbit/sec is so set to automatically be assigned by the line terminal devices (200-1 to 200-n) in order to adopt a momentary change of data.

At this time, when data of momentary greater than 100 Mbit/sec, as data to be sent to the terminal device: 1 (100-1), flows, the line terminal devices (200-1 to 200-n) assigns a communication band at 200 Mbit/sec used as a communication band that is automatically assigned by the line terminal devices (200-1 to 200-n) so as to send the data of greater than 100Mbit/sec to the terminal device: 1 (100-1), thereby controlling to continue data communication over the 100 Mbit/sec, instead of simply discarding the data of greater than 100 Mbit/sec.

Next, the line terminal devices (200-1 to 200-n) change the setting, for example, such as the error correction system, the cryptosystem, the data compression method in such a manner that the data can be fit at 100 bit/sec (i.e. the maximum band of the terminal device: 1 (100-1)).

Similarly, the setting management changing unit (307) automatically changes the communication band in the unit of data flowing through the transmission lines (2, 3), based on the monitored results of the monitor units (305, 306) and the operating plan information informed by the network management database unit (308).

The network management database unit (308) grasps a change in the monitor contents and the setting contents of each communication device, and informs the network manager about information representing that the transmission line can not efficiently be used. This information may, for example, be change information representing a change in the communication environment (information regarding deterioration of the line quality or error occurrence of interruption in the communication) or information representing the lack of band that can be increased and decreased freely based on a determination of each communication device, and the like.

### <Method of Changing Setting of Data Compression Method>

Descriptions will now be made to a method of changing the setting of a data compression method with reference to FIG. 3.

The line terminal devices (200-1 to 200-n) and the line aggregation device (300) dynamically change the data compression method, when the available band has been decreased in the transmission line, as a result that the setting of the assigned communication band is changed.

There is a plurality of data compression methods, such as MPEG-2, H.264, using different algorithm systems.

The line terminal devices (200-1 to 200-n) and the line aggregation device (300) include a conversion function in the data compression methods, such as MPEG-2, H.264, and the like.

The network manager sets the operating plan information representing the operating plan of the access line into the network management database unit (308) of the line aggregation device (300).

The operating plan information includes, for example, a condition of not using the data compression method, and when using the data compression method, a condition of using the method and information representing which data compression method is used and what data is preferentially used.

The network management database unit (308) informs the setting management changing unit (203) of the line terminal devices (200-1 to 200-n) and the setting management changing unit (307) of the line aggregation device (300), about the operating plan information.

As a result, the setting management changing unit (203) of the line terminal devices (200-1 to 200-n) and the setting management changing unit (307) of the line terminal device (300) set a data compression method, based on the operating plan information informed by the network management database unit (308).

The monitor units (201, 202) of the line terminal devices (200- to 200-n) monitor the status of the transmission lines (1) and (2), and grasp physical information or line quality of the transmission lines (1, 2), link information, data contents flowing through the transmission lines (1, 2), the maximum band, amount of communication, distance, delay and fluctuations of the transmission lines (1, 2), a kind of an adjacent device or terminal, and characteristics of the device or terminal.

The monitor units (305, 306) of the line aggregation device (300) monitor the status of the transmission lines (2) and (3), and grasp physical information or line quality of the transmission lines (2, 3), link information, data contents flowing through the transmission lines (2, 3), the maximum band, amount of communication, distance, delay and fluctuations of the transmission lines (2, 3), a kind of an adjacent device or terminal, and characteristics of the device or terminal.

As a result, the line terminal devices (200-1 to 200-n) and the line aggregation device (300) can grasp the physical information or line quality of the transmission line, the link information, the data contents through the transmission line, the maximum band, amount of communication, distance, delay and fluctuations of the transmission line, the kind of an adjacent device or terminal, and characteristics of the device or terminal.

The setting management changing unit (203) automatically changes a data compression method in the unit of data flowing through the transmission lines (1, 2) in accordance with the following method, based on the monitored result of the monitor units (201, 202) and the operating plan information informed by the network management database unit (308).

At the initiation of data communication, initial setting is used (including an invalid conversion function in the data compression method).

The monitor units (201, 202) monitor information regarding the physical information or line quality of the transmission lines (1, 2), link information, data contents flowing through the transmission lines (1, 2), the maximum band, amount of communication, distance, delay and fluctuations of the transmission lines (1, 2), a kind of an adjacent device or terminal, and characteristics of the device or terminal, and informs the setting management changing unit (203) about the monitored result.

The setting management changing unit (203) determines whether to change the setting of the data compression method, based on the monitored result informed by the monitor units (201, 202) and the operating plan information informed by the network management database unit (308).

For example, the setting management changing unit (203) grasps information representing that a data compression method X is not applied for data A flowing through the transmission lines (1, 2) (data for arbitrary application) and a data amount of the data A, based on the monitored result informed by the monitor units (201, 202).

On the other hand, the network management database unit (308) includes set information, as operating plan information, representing the data A and representing to change to use a data compression method X when the line quality is lower than a threshold value.

The band, that can be increased and decreased freely based on a determination of each communication device, is set as the operating plan information for each transmission line, in order to avoid data discard or data delay due to a momentary increase of data flowing through the transmission line.

The following conditions are set as information regarding priority levels included in the operating plan information.

Priority 1: Data compression method X is not used, if the data amount of data A is greater than 100Mbps.

Priority 2: Data compression method X is used, if the data amount of data A is equal to or smaller than 50Mbps, and the line quality of the transmission line is lower than a threshold voltage, and further, an excess band is equal to or greater than 100Mbps.

Priority 3: Data compression method X is used, if the data amount of data A is in a range between 50Mbps and 100Mbps, and the line quality of the transmission line is lower than a threshold value, and further, an excess band is equal to or greater than 200Mbps.

The communication device including the functions of the present embodiment sends data using the band that can be increased and decreased freely based on a determination of each communication device, in a period of time since reception of data until conversion of the received data in accordance with the above-described operating plan information.

The network management database unit (308) informs the setting management changing unit (203) about the above-described operating plan information. The setting management changing unit (203) determines whether to change to the setting of the data compression method, based on the above-described monitored result informed by the monitor units (201, 202) and the above-described operating plan information informed by the network management database unit (308) so as to change the data compression method in accordance with the determined result. The setting management changing unit (203) makes the above-described determination at every unit of time (milliseconds, seconds, and the like). The above-described operating plan information has been described by way of example, and is not to limit the above-described conditions. Any arbitrary conditions for changing the setting of the data compression method can be formed.

When determined to change the setting of data compression method, the setting management changing unit (203) changes the setting of the data compression method, specifies a communication device including the functions of the present embodiment, sends a control frame to the specified communication device, so as to change the setting information in each of the devices.

The setting management changing unit (203) informs the network management database unit (308) about the determination information representing that a changing process is necessary based on the determination, allowance information representing whether a changing process can be implemented, and result information.

The determination information may, for example, represent the band used for the data A or the line quality of the transmission line.

The allowance information representing whether a changing process can be implemented is the above-described determination information, and is informed, for example, when it is not possible to determine whether the communication device connected through the transmission line can correspond to the changing process of the setting information.

The result information represents whether the setting of the data compression method has been changed.

The changing process is preferentially implemented for high priority data set in the operating plan information.

Note, however, that the changing process is implemented sequentially for lower priority data, if any condition, such as the communication band, changes so as to exceed a threshold value of the operating condition included in the operating plan information, as a result that the changing process has been implemented for the high priority data.

The changing process for the lower priority data is done when there is no effect on the high priority data.

Similarly, the setting management changing unit (307) automatically sets the data compression method in the unit of data flowing through the transmission lines (2, 3), based on the monitored result of the monitor units (305, 306) and the operating plan information informed by the network management database unit (308).

The network management database unit (308) grasps a change in the monitor contents and the setting contents of each communication device, and informs the network manager about information representing that the transmission line can not efficiently be used. This information may, for example, be change information representing a change in the communication environment (information regarding deterioration of the line quality or error occurrence of interruption in the communication) or information representing the lack of band that can be increased and decreased freely based on a determination of each communication device, and the like.

Accordingly, the communication control system of the present embodiment manages the operating plan information including the plurality of set conditions when controlling the communication band, in the network management database unit (308), and informs the line terminal devices (200-1 to 200-n) and the line aggregation device (300) about the managed operating plan information. The line terminal devices (200-1 to 200-n) and the line aggregation device (300) compare the operating plan information informed by the network management database unit (308) and the status of the transmission line, and controls the communication band based on the condition in accordance with the status of the transmission line. As a result, it is possible to dynamically change the communication band used between the communication devices comprising the access line, thus attaining the effective use of the band of the transmission line connected to the communication devices.

The communication control system of the present embodiment can automatically change the error correction system, cryptosystem, data compression method and communication band used by the communication device.

As shown in FIG. 2, if the access line is comprised by a plurality of devices, each of the communication devices automatically changes the setting of the error correction system, the setting of the cryptosystem, the setting of the communication band and the setting of the data compression method, upon receiving information about the operating plan information from the device including the functions of the network management database unit (308).

### (Second Exemplary Embodiment)

A second exemplary embodiment of the present invention will now be described.

In the communication control system according to the first exemplary embodiment, upon receiving information of the operating plan information from the network management database unit (308), the line terminal devices (200-1 to 200-n) and the line aggregation device (300) change the setting of the error correction system, the setting of the cryptosystem, the setting of the communication band and the setting of the data compression method, based on the operating plan information.

In a communication control system of the second exemplary embodiment, the line terminal devices (200-1 to 200-n) and the line aggregation device (300) access the network management database unit (308), acquire the operating plan information therefrom, and change the setting of the error correction system, the setting of the cryptosystem, the setting of the communication band and the setting of the data compression method, based on the acquired operating plan information, like the first exemplary embodiment.

As a result, the line terminal devices (200-1 to 200-n) and the line aggregation device (300) can automatically change the setting of the error correction system, the setting of the cryptosystem, the setting of the communication band and the setting of the data compression method.

As shown in FIG. 2, if the access line is composed of a plurality of devices, each of the communication devices included in the access line accesses the device including the functions of the network management database unit (308), acquires the operating plan information therefrom, and changes the setting of the error correction system, the setting of the cryptosystem, the setting of the communication band and the setting of the data compression method based on the acquired operating plan information.

### (Third Exemplary Embodiment)

A third exemplary embodiment of the present invention will now be described.

As shown in FIG. 3, a communication control system of the third exemplary embodiment is characterized in that the line terminal devices (200-1 to 200-n) changes the setting of the data compression method in accordance with the terminal devices (100-1 to 100-n) connected to the line terminal devices (200-1 to 200-n).

As a result, the line terminal devices (200-1 to 200-n) can change the setting of the data compression method in accordance with the terminal devices (100-1 to 100-n) connected thereto. In addition, the effective use of the band of the transmission lines (2, 3) can be attained, because there is no need to increase the amount of data flowing through the transmission line (2) or (3). Descriptions will now be made to a method of changing the setting of the data compression method in the communication control system of the present embodiment with reference to FIG. 3. Note that the following method of changing the setting of the data compression method is preferable for a delivery service for using the same data, such as moving picture information, by each of the terminal devices (100-1 to 100-n).

When data of different compression rates are necessary for the respective terminal devices (100-1 to 100-n), upon reception of one kind of data from the transmission line (3), the line aggregation device (300) sends the received one kind of data to the transmission line (2) as is.

Upon reception of one kind of data from the transmission line (2), the line terminal devices (200-1 to 200-n) convert the received one kind of data based on the data compression method in accordance with each terminal device (100-1 to 100-n) connected to the line terminal devices (200-1 to 200-n), and send the converted data to the transmission line (1).

As a result, the line terminal devices (200-1 to 200-n) can change the setting of the data compression method in accordance with the terminal devices (100-1 to 100-n) connected to the line terminal devices (200-1 to 200-n). In addition, the effective use of the band of the transmission lines (2, 3) can be attained, because there is no need to increase the amount of data flowing through the transmission line (2, 3).

Upon reception of various kinds of data from the transmission line (3), the line aggregation device (300) sends data of a data compression method that can be converted by the line terminal devices (200-1 to 200-n) to the transmission line (2) as is, converts data of a data compression method that can be converted by the line terminal devices (200-1 to 200-n) into data of a data compression method so as to be converted by the line terminal devices (200-1 to 200-n) in the line aggregation device (300), and sends the converted data to the transmission line (2).

As a result, there is no need to increase the amount of data flowing through the transmission line (2), thus attaining the effective use of the band of the transmission line (2).

### (Fourth Exemplary Embodiment)

A fourth exemplary embodiment of this invention will now be described.

In the case where no error correction system is used and coded data cannot be decoded due to deterioration of the line quality, a communication control system of the fourth exemplary embodiment applies an error correction system for the data which can not be decoded, so as to control restoration of the data.

As a result, even if data cannot be decoded due to the deterioration of the line quality, the data can be restored.

For example, the line terminal devices (200-1 to 200-n) recovers the coded data which can not decoded and applies an error correction system, based on the operating plan information informed by the network management database unit (308). As a result, the data which cannot be decoded can successfully be restored.

If coding is required, the line terminal devices (200-1 to 200-n) controls to apply an error correction system for coded data.

Like the line terminal devices (200-1 to 200-n), the line aggregation device (300) implements the same controlling process.

Accordingly, in the case where no error correction system is used and coded data can not be decoded due to deterioration of the line quality, the communication control system of the present embodiment applies an error correction system for the data which cannot be decoded, so as to control restoration of the data.

As a result, even when data cannot be decoded due to deterioration of the line quality, this data can successfully be restored.

The above-described embodiments are preferred embodiments of the present invention only, and are not to limit the scope of the present invention. Those skilled in the art will appreciate that various adaptations and modifications of the above-described embodiments can be configured without departing from the scope of the present invention.

For example, the hardware, software, or a combination of them can implement the operation process in each communication device included in the communication control system of the above-described embodiments.

When the process is implemented by the software, a program describing the process sequence is installed in a memory of a computer incorporated in the dedicated hardware so as to be executed, or the program is installed in a general-purpose computer which can execute various processes so as to executed.

For example, the program can be stored in advance in a hard disk or ROM (Read Only Memory) as a recording medium. Alternatively, the program can temporarily or permanently be stored (recorded) in a removable recording medium, such as a floppy disk, CD-ROM (Compact Disc Read Only Memory), MO (Magneto Optical) disk, DVD (Digital Versatile Disc), magnetic disc or a semiconductor memory. Such removable recording media can be provided as package software.

In addition to that the program is installed in the computer from any of the above removable recording media, the program can be transmitted via wireless link from the download site to the computer, transmitted to the computer by wire via a network, such as a LAN (Local Area Network) or the Internet. Then, the computer receives the transmitted program, and can install the program on a recording medium, such as a built-in hard disk.

The processing can be executed in a time series in accordance with the processing operations described in the above-described embodiments, and other than that, the processing can be executed parallelly or individually as needed or in accordance with the processing capability of the device carrying out the process. The communication control system described in the above-described embodiments may be formed in a logical aggregation configuration of a plurality of devices, or may be formed of the respective configurations included in the same enclosure.

The present invention can be applied to any communication device included in the access line.

## Claims

1. A communication device included in an access line, comprising:
a monitor unit which monitors a status of a transmission line connected to the communication device; and
a communication control unit which controls a communication band used for performing data communication, in accordance with the status of the transmission line.

2. The communication device according to claim 1, further comprising:
an acquisition unit which acquires operating plan information including a plurality of set conditions for controlling the communication band, and wherein
the communication control unit compares the status of the transmission line and the operating plan information, and controls the communication band based on the conditions in accordance with the status of the transmission line.

3. The communication device according to claim 2,
wherein the acquisition unit acquires the operating plan information, when the operating plan information is informed by an management unit which manages the operating plan information.

4. The communication device according to claim 2 or 3,
wherein the acquisition unit accesses the management unit which manages the operating plan information, and acquires the operating plan information from the management unit.

5. The communication device according to claim 3 or 4, further comprising the management unit.

6. The communication device according to claim 3 or 4,
wherein the management unit is separated and independent from the communication device.

7. The communication device according to any one of claims 1 to 6,
wherein the status of the transmission line includes any one of physical information of the transmission line, line quality of the transmission line, a link state of the transmission line, data contents flowing through the transmission line, a maximum band of the transmission line, an amount of communication of the transmission line, a distance of the transmission line, a delay state of the transmission line, a fluctuation state of the transmission line and information regarding a device connected through the transmission line.

8. The communication device according to any one of claims 1 to 7,
wherein the communication control unit controls at least one of an error correction system, cryptosystem, data compression method and communication band used by the communication device, and controls the communication band.

9. The communication device according to claim 8,
wherein the communication control unit controls the communication device to change setting of a data compression method in accordance with a communication device connected through the transmission line.

10. The communication device according to claim 8 or 9,
wherein when no error correction system is used, and coded data cannot be decoded due to deterioration of line quality of the transmission line, the communication control unit applies an error correction system for the data that can not be decoded, and controls restoration of the data.

11. A communication control system which comprises a plurality of communication devices connected with other through a transmission line so as to form an access line,
wherein each of the communication devices includes:
a monitor unit which monitors a status of the transmission line connected to each of the communication devices, and
a communication control unit which controls a communication band used for performing data communication in accordance with the status of the transmission line.

12. The communication control system according to claim 11, further comprising:
a management unit which manages operating plan information including a plurality of set conditions for controlling the communication band, and
wherein each of the communication devices includes
an acquisition unit which acquires the operating plan information from the management unit, and
the communication control unit
compares the status of the transmission line and the operating plan information, and controls the communication band based on the set conditions in accordance with the status of the transmission line.

13. The communication control system according to claim 12,
wherein the communication device acquires the operating plan information, when the operating plan information is informed by the management unit.

14. The communication control system according to claim 12 or 13,
wherein the communication device accesses the management unit so as to acquire the operating plan information from the management unit.

15. The communication control system according to any one of claims 12 to 14,
wherein the communication device comprises the management unit.

16. The communication control system according to any one of claims 12 to 14,
wherein the management unit is separated and independent from the communication device.

17. A method of controlling communication performed by a communication device included in an access line, comprising the steps of:
monitoring a status of a transmission line connected to the communication devices; and
controlling a communication band used for performing data communication in accordance with the status of the transmission line.

18. A recording medium which stores a communication control program for controlling a communication device included in an access line to execute processes of:
monitoring a status of a transmission line connected to the communication devices; and
controlling a communication band used for performing data communication in accordance with the status of the transmission line.
